# FASCICULE DE BREVET EUROPEEN

(11) **EP 3 399 204 B1**
(45) Date de publication et mention de la délivrance du brevet: **15.05.2019**
(21) Numéro de dépôt: 18166192.7
(22) Date de dépôt: 06.04.2018
(51) Int. Cl.: F16D 13/75

(54) **MECANISME D'EMBRAYAGE, NOTAMMENT POUR VEHICULE AUTOMOBILE**
KUPPLUNGSMECHANISMUS, INSBESONDERE FÜR KRAFTFAHRZEUG
CLUTCH MECHANISM, IN PARTICULAR FOR A MOTOR VEHICLE

(30) Priorité: 26.04.2017 FR 1753626
(43) Date de publication de la demande: 07.11.2018
(73) Titulaire: Valeo Embrayages, 80009 Amiens cedex 2 (FR)
(72) Inventeur: DELIENCOURT, Nicolas, 80009 AMIENS (FR)
(74) Mandataire: Vincent, Catherine Marie Marguerite

(56) Documents cités:
- DE-A1-102008 051 100
- DE-A1-102009 004 715
- FR-A1- 2 765 287

## Description

La présente invention concerne un mécanisme d'embrayage, notamment pour véhicule automobile.

La présente invention concerne un mécanisme d'embrayage à rattrapage d'usure, notamment pour véhicule automobile.

Un dispositif d'embrayage comporte classiquement un plateau de réaction, un mécanisme d'embrayage comportant un plateau de pression mobile, et un disque de friction monté entre lesdits plateaux de réaction et de pression. Le mouvement du plateau de pression est commandé par un diaphragme, lui-même commandé par une butée d'embrayage.

Le plateau de pression est ainsi mobile entre une position d'embrayage dans laquelle le disque de friction est serré entre lesdits plateaux de pression et de réaction, et une position de débrayage dans laquelle le disque de friction est libéré.

L'utilisation du dispositif d'embrayage provoque une usure des garnitures du disque de friction ainsi que des contre-matériaux des plateaux de pression et de réaction associés. Ceci se traduit par une variation de la position du plateau de pression par rapport au diaphragme associé et/ou par rapport au plateau de réaction, générant une variation de l'effort de serrage du disque de friction et une modification du point de léchage et de la course de la butée d'embrayage. On rappelle que le point de léchage est la position à partir de laquelle un couple peut être transmis progressivement au travers du dispositif d'embrayage.

Un dispositif d'embrayage à rattrapage d'usure est connu du document FR 2 765 287 au nom de la Demanderesse. Ce document divulgue un dispositif d'embrayage à rattrapage d'usure pour véhicule automobile, comportant un plateau de pression destiné à venir en appui sur un disque de friction du dispositif d'embrayage, un diaphragme servant à l'actionnement du plateau de pression entre une position totalement embrayée dans laquelle ledit plateau de pression est poussé contre le disque de friction, et une position totalement débrayée dans laquelle ledit plateau de pression est écarté du disque de friction par l'intermédiaire de moyens de rappel du plateau de pression.

Le plateau de pression, le disque de friction et le diaphragme sont logés dans un couvercle qui est fixe par rapport au plateau de réaction.

Le dispositif comporte en outre un organe de rattrapage de l'usure du disque de friction, intercalé entre le diaphragme et le plateau de pression, et mobile en rotation autour d'un axe dans une plage déterminée, ledit organe de rattrapage comportant une rampe coopérant avec une contre-rampe formée ou solidaire du plateau de pression, de façon à ajuster la distance entre le diaphragme et le plateau de pression et compenser l'usure du disque de friction en fonction de la position de la rampe par rapport à la contre-rampe.

Le dispositif d'embrayage comporte en outre des moyens de déplacement comprenant une roue à rochet apte à pivoter autour d'un axe monté sur une cassette. Les moyens de déplacement comportent également un organe élastique fixé sur la cassette, ledit organe élastique comportant une zone d'actionnement coopérant avec la roue à rochet de manière à actionner le pivotement de la roue à rochet en cas d'usure. La zone d'actionnement est formée sur un organe d'actionnement de l'organe élastique.

La roue à rochet est couplée en rotation à une vis sans fin montée autour de l'axe précité et engrenant avec un secteur denté solidaire de l'organe de rattrapage. Ainsi, la rotation de la roue à rochet entraîne le déplacement de l'organe de rattrapage de façon à compenser l'usure.

L'organe élastique est actionné par le diaphragme, lors de son déplacement entre ses positions embrayée et débrayée.

Le document DE 10 2008 051 100 divulgue un dispositif d'embrayage à rattrapage d'usure dans lequel les moyens de déplacement de l'organe de rattrapage d'usure comportent une tige filetée montée pivotante dans une cassette, ladite cassette étant solidaire du plateau de pression. La tige filetée est solidaire d'une roue à rochet entraînée en rotation par un organe élastique. La tige filetée coopère avec un chariot taraudé solidaire de l'organe de rattrapage. Ainsi, la rotation de la roue à rochet et de la tige filetée entraîne le déplacement de l'organe de rattrapage d'usure, par coopération entre la tige filetée et le chariot. Le chariot translate par rapport à l'axe de la roue à rochet.

Dans les solutions techniques précitées, un grand nombre de pièces sont mises en mouvement pour effectuer une opération de rattrapage d'usure. Cela génère des frottements internes qui nuisent au bon fonctionnement du dispositif d'embrayage à rattrapage d'usure. L'invention vise à réduire le nombre de composants.

L'invention vise à proposer un dispositif et un mécanisme d'embrayage de structure simple, économique et fiable.

A cet effet, elle propose un mécanisme d'embrayage, notamment pour véhicule automobile, comportant :
un couvercle,
un plateau de pression mobile par rapport au couvercle selon un axe du mécanisme, et destiné à coopérer avec un disque de friction,
un diaphragme mobile entre une position embrayée et une position débrayée, apte à actionner le déplacement du plateau de pression,
des moyens de rattrapage d'usure intercalés entre le diaphragme et le plateau de pression, lesdits moyens de rattrapage comportant des moyens à rampe coopérant avec des moyens à contre-rampe de façon à ce que la rotation des moyens à rampe par rapport aux moyens à contre-rampe modifie la distance entre le diaphragme et le plateau de pression, et des moyens d'entraînement en rotation des moyens à rampe, lesdits moyens d'entraînement comportant un écrou coopérant avec une tige filetée selon un axe principal, caractérisé en ce que l'écrou est lié au plateau de pression et est apte à pivoter autour de son axe principal, la tige filetée étant insérée dans les moyens à rampe, de façon à entraîner la rotation des moyens à rampe par rapport au plateau de pression, par rotation de l'écrou autour de la tige filetée, la tige filetée étant arrêté en rotation autour de l'axe principal par coopération de forme entre la tige filetée et les moyens à rampe.

Selon l'invention, c'est la rotation de l'écrou qui entraîne le déplacement de la tige filetée selon son propre axe principal, provoquant alors le déplacement relatif des moyens à rampe par rapport au plateau de pression, de façon à compenser l'usure du disque de friction.

La tige filetée et les moyens à rampe peuvent être conçus pour limiter la rotation de la tige filetée par rapport aux moyens à rampe, autour de l'axe principal, à un débattement angulaire inférieur à 45°, de préférence inférieur à 30°, entre un état neuf et un état usé des garnitures de friction du disque de friction.

Pour cela, la tige filetée peut être engagée avec un léger jeu dans les moyens à rampe, ledit jeu permettant un faible débattement autour de l'axe principal, tout en arrêtant la rotation de la tige filetée autour dudit axe, au-delà du faible débattement autorisé.

Un tel jeu permet de compenser le déplacement du plateau de pression (et donc de l'axe principal) par rapport à l'ouverture, selon l'axe du mécanisme, au fur et à mesure que l'usure est compensée. Un tel déplacement est induit par le déplacement relatif des rampes par rapport aux contre-rampes.

La tige filetée peut comporter une partie engagée dans une ouverture de forme complémentaire des moyens à rampe, la forme de ladite partie et de ladite ouverture permettant d'arrêter en rotation la tige filetée autour de l'axe principal.

Ladite partie peut comporter un méplat, engagé dans l'ouverture de forme complémentaire des moyens à rampe.

Dans un tel cas, l'ouverture peut comporter un bord incliné de façon à ce que ledit méplat soit apte à venir en appui surfacique sur le bord incliné, de façon à limiter la rotation de la tige filetée autour de l'axe principal.

La tige filetée peut présenter une portion coudée, ladite portion coudée étant insérée dans l'ouverture des moyens à rampe.

La portion coudée peut s'étendre perpendiculairement à l'axe principal.

L'écrou peut être monté dans une cassette fixe par rapport au plateau de pression.

La tige filetée peut passer au travers de l'écrou.

La cassette peut former un support permettant de maintenir l'écrou en position circonférentielle sur le plateau de pression, tout en autorisant la rotation de l'écrou autour de l'axe de ce dernier.

La cassette peut comporter une base à partir de laquelle s'étendent deux flancs écartés circonférentiellement l'un par rapport à l'autre, l'écrou étant monté circonférentiellement entre les flancs de la cassette.

Les flancs permettent de maintenir circonférentiellement l'écrou en position tandis que la base peut servir à la fixation de la cassette sur le plateau de pression, directement ou indirectement.

L'écrou peut être guidé en rotation sur la cassette.

En particulier, l'écrou peut être guidé en rotation sur les flancs de la casette. Pour cela, l'écrou peut comporter deux extrémités axiales cylindriques, engagée dans des ouvertures de guidage de forme complémentaire des flancs de la cassette.

La tige filetée peut être guidée en rotation sur la cassette.

En particulier, la tige filetée peut être guidée en rotation sur les flancs de la cassette. Pour cela, la tige filetée peut comporter au moins une zone cylindrique, engagée dans des ouvertures de forme complémentaire des flancs de la cassette.

L'écrou peut comprendre des moyens d'entraînement formés à sa périphérie externe, les moyens d'entraînement de l'écrou comportant une roue à rochet coopérant avec des moyens d'encliquetage, lesdits moyens d'encliquetage étant aptes à actionner la rotation de la roue à rochet en cas d'usure du disque de friction.

La roue à rochet et l'écrou peuvent former une seule et même pièce, ou être formés par deux pièces solidaires l'une de l'autre, par exemple.

Les moyens d'encliquetage peuvent comporter un organe élastique comprenant une zone d'actionnement maintenue en appui sur une denture de la roue à rochet.

L'organe élastique peut être élastiquement déformable.

La tige filetée peut passer au travers de la roue à rochet.

La tige filetée peut se déplacer par rapport à l'écrou selon son propre axe principal.

Le mécanisme peut comporter des moyens d'anti-rotation aptes à autoriser la rotation de l'écrou et/ou de la roue à rochet dans un unique sens de rotation.

L'organe élastique peut comprendre un organe d'actionnement sur lequel est formée la zone d'actionnement.

Les moyens d'anti-rotation peuvent comporter au moins deux lamelles élastiques, maintenues en appui sur la denture de la roue à rochet, dans des zones situées à des distances différentes l'une de l'autre par rapport à l'axe de rotation de la roue à rochet.

La tige filetée peut être conçue pour être déplacée selon un mouvement de translation par rapport à la roue à rochet.

L'invention concerne également un dispositif comprenant un mécanisme d'embrayage du type précité, caractérisé en ce qu'il comporte un plateau de réaction et un disque de friction, le plateau de pression étant mobile par rapport au plateau de réaction, entre une position embrayée dans laquelle le disque de friction est serré entre le plateau de pression et le plateau de réaction, et une position débrayée, dans laquelle le disque de friction est libéré.

Le mécanisme ou le dispositif d'embrayage peuvent comporter l'une ou plusieurs des caractéristiques suivantes :
- le dispositif comporte un couvercle fixe par rapport au plateau de réaction, le diaphragme étant apte à pivoter autour d'une zone d'appui du couvercle,
- le diaphragme est maintenu en appui sur le couvercle par l'intermédiaire de moyens élastiques, par exemple une rondelle élastique,
- la diaphragme comporte une partie annulaire à partir de laquelle des doigts s'étendent radialement vers l'intérieur,
- la périphérie radialement interne des doigts est apte à coopérer avec une butée d'embrayage,
- le diaphragme est centré par rapport au couvercle par l'intermédiaire de rivets ou de plots fixés sur le couvercle ou formés avec ledit couvercle,
- le couvercle comporte une partie annulaire s'étendant radialement, dont la périphérie radialement externe est prolongée par une partie cylindrique,
- le couvercle délimite un volume interne logeant, au moins en partie, le diaphragme, les moyens à rampe, les moyens d'entraînement en rotation des moyens à rampe, et le plateau de pression,
- la tige comporte une première partie et une seconde partie perpendiculaires l'une par rapport à l'autre, la première partie comportant une zone filetée coopérant avec l'écrou, la seconde partie étant en prise avec les moyens à rampe,
- la roue à rochet est apte à venir en appui sur l'un au moins des flancs de la cassette,
- la roue à rochet est apte à venir en appui sur les deux flancs de la cassette,
- les moyens à rampe comportent un organe annulaire comprenant une première extrémité axiale comportant des rampes, en appui sur des contre-rampes formées sur le plateau de pression ou fixes par rapport au plateau de pression, et une seconde extrémité axiale, opposée à la première extrémité, le diaphragme étant apte à prendre appui sur ladite seconde extrémité,
- l'organe annulaire des moyens à rampe est centré sur le plateau de pression par l'intermédiaire de plots, par exemple des plots solidaires ou formés intégralement avec le plateau de pression,
- la base de la cassette comporte une zone de fixation s'étendant radialement vers l'intérieur par rapport aux flancs,
- l'organe élastique est fixé au couvercle, en particulier à la partie annulaire radiale du couvercle, par exemple par rivetage,
- l'organe élastique comporte une première partie s'étendant radialement, fixée au couvercle et une deuxième partie formant l'organe d'actionnement et s'étendant axialement depuis la première partie, l'extrémité libre de la deuxième partie formant la zone d'actionnement maintenue en appui sur une denture de l'écrou ou de la roue à rochet,
- l'organe élastique est actionné par le déplacement du diaphragme entre ses positions embrayée et débrayée,
- en variante, l'organe élastique est actionné par le déplacement du plateau de pression entre ses positions embrayée et débrayée, l'organe élastique étant en appui directement sur les moyens à rampe,
- l'organe élastique est en appui sur la périphérie radialement externe du diaphragme,
- l'organe élastique comporte une portion d'appui décalée radialement vers l'intérieur par rapport à la zone d'actionnement, ladite portion d'appui étant apte à prendre appui sur le diaphragme,
- les moyens d'anti-rotation comportent au moins deux parties se présentant chacune sous la forme d'une tôle, lesdites tôles étant empilées l'une sur l'autre,
- chaque tôle comporte au moins une lamelle élastique, de préférence au moins deux lamelles élastiques,
- l'organe élastique est formé par la superposition de plusieurs tôles élastiques.

L'invention sera mieux comprise et d'autres détails, caractéristiques et avantages de l'invention apparaîtront à la lecture de la description suivante faite à titre d'exemple non limitatif en référence aux dessins annexés dans lesquels :
- les figures 1 à 12 illustrent un dispositif d'embrayage et un mécanisme d'embrayage selon une première forme de réalisation de l'invention, en particulier :
- les figures 1 à 5 sont des vues schématiques et en coupe en axiale, d'une partie du dispositif, illustrant différentes étapes de fonctionnement du mécanisme,
- la figure 6 est une vue de détail, de face, d'une partie du mécanisme,
- la figure 7 est une vue en coupe selon la ligne A-A de la figure 6,
- la figure 8 est une vue en coupe selon la ligne B-B de la figure 6,
- la figure 9 est une vue éclatée et de détail, en perspective, d'une partie du mécanisme,
- la figure 10 est une vue en perspective, d'une partie du mécanisme,
- la figure 11 est une vue de détail, en perspective, illustrant une partie du mécanisme avant usure,
- la figure 12 est une vue de détail, en perspective, illustrant une partie du mécanisme après usure,
- les figures 13 à 15 illustrent un mécanisme d'embrayage selon une seconde forme de réalisation de l'invention, en particulier :

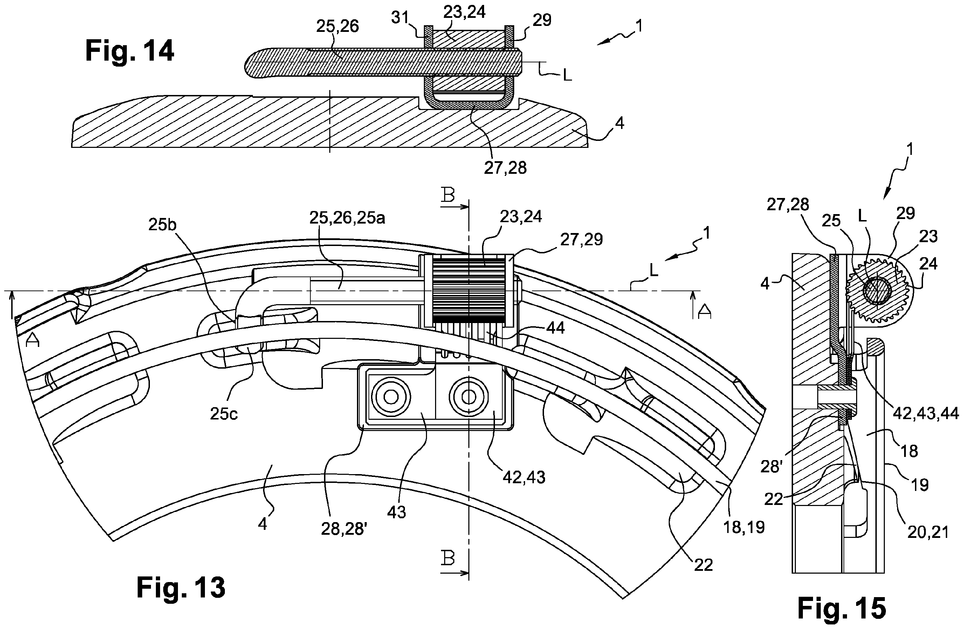

- la figure 13 est une vue de détail, de face, d'une partie du mécanisme,
- la figure 14 est une vue en coupe selon la ligne A-A de la figure 13,
- la figure 15 est une vue en coupe selon la ligne B-B de la figure 13.

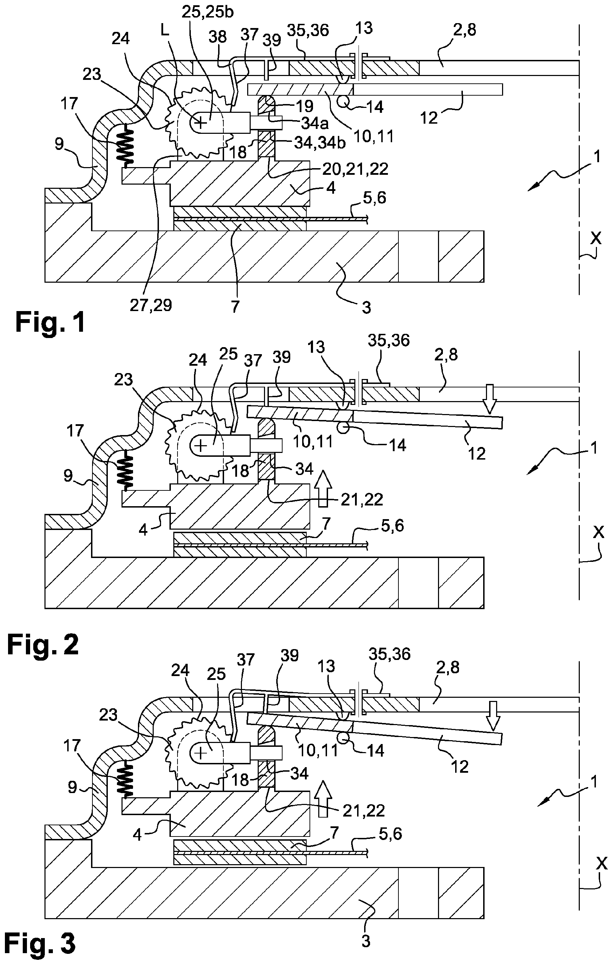

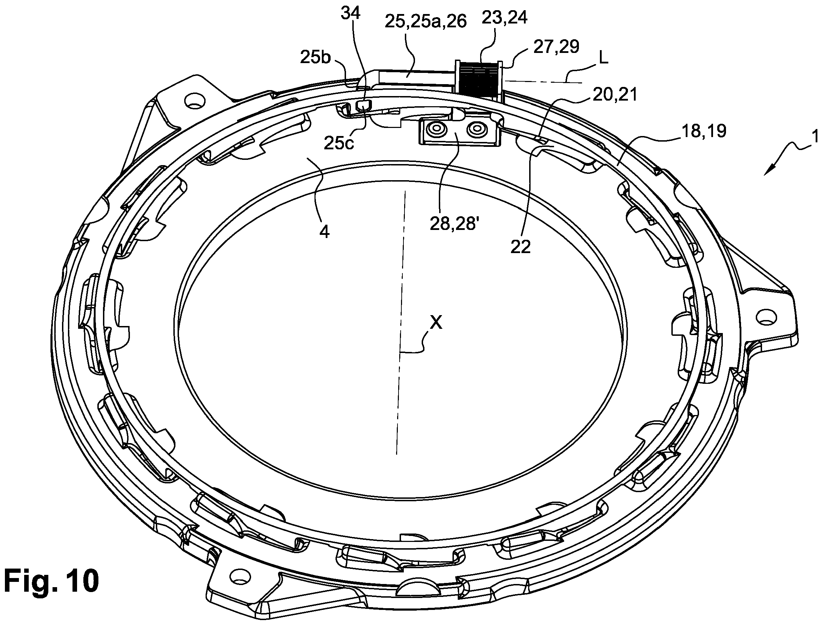

Les figures 1 à 12 illustrent un dispositif d'embrayage et un mécanisme d'embrayage 1 selon une première forme de réalisation de l'invention.

Le dispositif d'embrayage comporte un couvercle fixe 2 annulaire d'axe X, destiné à être fixé sur un plateau de réaction 3, et un plateau de pression 4 annulaire et mobile selon l'axe X par rapport au plateau de réaction 3 et au couvercle 2. Un disque de friction 5 est destiné à être intercalé axialement entre le plateau de pression 4 et le plateau de réaction 3. Le disque de friction 5 comporte un support 6 de part et d'autre duquel sont fixées des garnitures de friction 7.

Le couvercle 2 comporte une partie annulaire 8 s'étendant globalement radialement et une partie globalement cylindrique 9, s'étendant axialement depuis la périphérie radialement externe de la partie annulaire radiale 8.

Le dispositif 1 comporte de plus un diaphragme 10 comprenant une partie annulaire 11 déformable, à la manière d'une rondelle Belleville, à partir de laquelle des doigts d'actionnement 12 s'étendent radialement vers l'intérieur. La périphérie radialement interne des doigts 12 est apte à coopérer avec une butée d'embrayage, comme cela est connu en soi. Le diaphragme 10 est monté en appui sur le couvercle 2, au niveau de zones d'appui 13. Les zones d'appui 13 sont réparties sur la circonférence et sont formées par des zones en saillie de la partie annulaire radiale 8 du couvercle 2.

Le diaphragme 10 est centré par l'intermédiaire de plots ou de rivets, fixés sur la partie radiale 8 du couvercle 2.

Le diaphragme 10 est maintenu en appui sur lesdites zones d'appui 13 du couvercle 2, par l'intermédiaire d'un organe d'appui formé ici par un jonc annulaire 14 situé à l'opposé du couvercle 2 par rapport au diaphragme 10.

Le diaphragme 10 sert à l'actionnement du plateau de pression 4 entre une position totalement embrayée dans laquelle ledit plateau de pression 4 est poussé vers le plateau de réaction 3, de façon à enserrer le disque de friction 5 entre lesdits plateaux 3, 4, et une position débrayée dans laquelle ledit plateau de pression 4 est écarté du plateau de réaction 3 de façon à libérer le disque de friction 5. A cet effet, des languettes élastiques 17 aptes à exercer un effort axial relient le couvercle 2 et le plateau de pression 4. Les languettes élastiques 17 peuvent se présenter sous la forme de ressorts à lames ou ressorts hélicoïdaux. Les languettes 17 sont agencées de façon à rappeler élastiquement le plateau de pression 4 vers sa position débrayée. Les languettes 17 assurent également un couplage en rotation entre le couvercle 2 et le plateau de pression 4.

Des moyens de rattrapage d'usure sont intercalés axialement entre le plateau de pression 4 et le diaphragme 10. Plus particulièrement, le diaphragme 10 vient coopérer avec lesdits moyens de rattrapage d'usure dans une zone située radialement à l'extérieur des zones d'appui 13 dudit diaphragme 10 sur le couvercle 2.

Ces moyens comportent un organe de rattrapage mobile 18 se présentant sous la forme d'un anneau et comportant une extrémité 19 contre laquelle le diaphragme 10 est apte à venir en appui, et une extrémité 20 comportant au moins une rampe 21 s'étendant circonférentiellement, coopérant avec une contre-rampe 22 associée, ménagée directement sur le plateau de pression 4.

A titre d'exemple, l'angle de chaque rampe 21 de l'organe de rattrapage 18 et de la contre-rampe 22 associée du plateau de pression 4 est compris entre 2 et 12°.

L'organe de rattrapage 18 forme ainsi des moyens à rampe.

Des moyens de déplacement permettent d'entraîner en rotation l'organe de rattrapage 18 autour de l'axe X, en cas d'usure du disque de friction 5.

Les moyens de déplacement comportent une roue à rochet 23 comportant une denture externe 24 et un taraudage interne de manière à former un écrou, et une tige 25 comportant une zone filetée 26 coopérant avec la roue à rochet 23.

L'écrou 13 comprend des moyens d'entraînement 24 formés sur sa périphérie externe réalisés par exemple sous la forme de la roue à rochet 23.

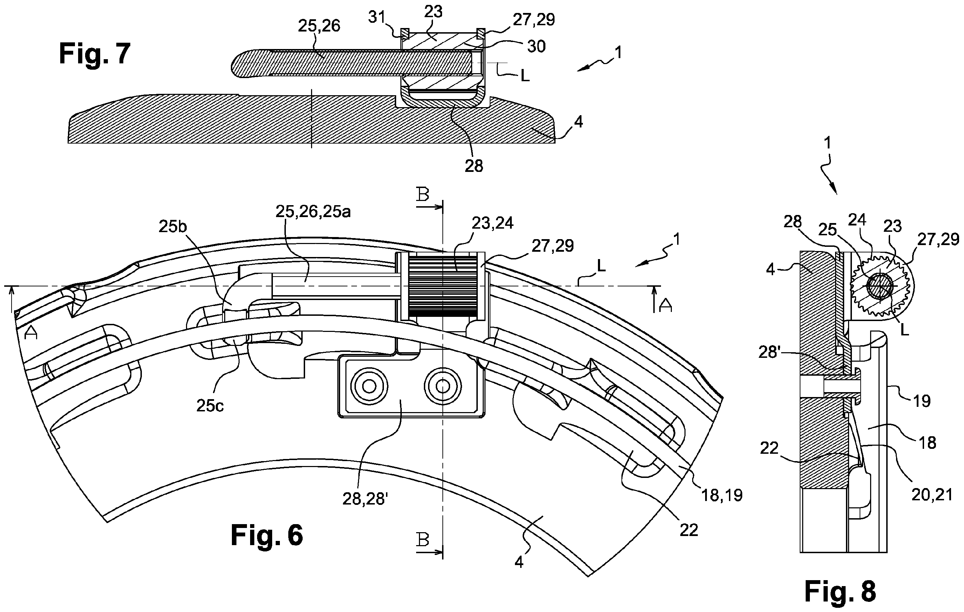

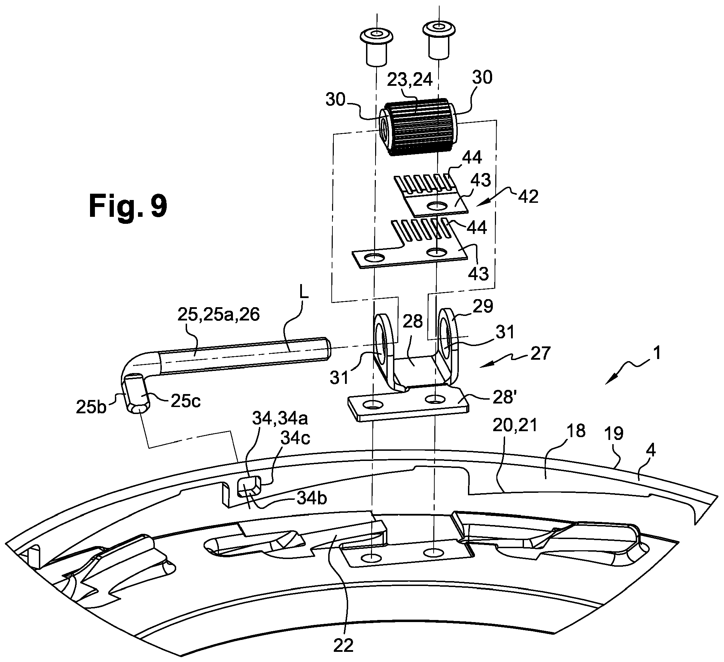

La roue à rochet 23 est montée dans une cassette 27 formant un support. La cassette 27 comporte une base plane 28, à partir de laquelle s'étendent deux flancs 29, perpendiculairement à la base 28 (voir notamment figures 7 et 9). Les flancs 29 s'étendent radialement. La base 28 comporte une zone de fixation 28' s'étendant radialement vers l'intérieur depuis la partie de la base 28 supportant les flancs 29. Ladite zone de fixation 28' permet la fixation de la cassette 27 sur le plateau de pression 4, par l'intermédiaire de vis ou de rivets par exemple. Les flancs 29 comportent des trous 31 cylindriques (figures 7 et 9). Les extrémités de la roue à rochet 23 présentent des portions cylindriques 30, engagées dans les trous 31 de forme complémentaire des flancs 29, de manière à former un guidage en rotation de la roue à rochet 23 sur la cassette 27, à la manière d'un palier lisse.

La roue à rochet 23 est ainsi montée circonférentiellement entre les flancs 29 tout en étant apte à pivoter autour de son axe L, la tige filetée 25 traversant ladite roue à rochet 23. La roue à rochet 23 est en appui sur les flancs 29, directement ou par l'intermédiaire d'une rondelle de frottement.

La tige filetée 25 comporte une première partie 25a et une seconde partie 25b s'étendant perpendiculairement l'une par rapport à l'autre. La première partie 25a comporte la zone filetée 26 engagée dans le taraudage de la roue à rochet 23, la première partie 25a traversant les trous 31 des flancs 29. L'extrémité libre de la seconde partie 25b est engagée dans une ouverture 34 de l'organe de rattrapage 18.

L'ouverture 34 présente notamment deux bords d'extrémité 34a, 34b décalés axialement l'un par rapport à l'autre, reliés par deux bords latéraux 34c (voir notamment figure 9). Le bord d'extrémité 34b située du côté du plateau de pression 4 forme une surface s'étendant radialement tandis que le bord d'extrémité opposé 34a forme une surface oblique par rapport au plan radial.

La seconde partie 25b présente une forme générale cylindrique pourvue d'un méplat 25c orienté à l'opposé du plateau de pression 4, c'est-à-dire orientée vers le bord d'extrémité oblique 34a.

La seconde partie 25b est monté avec un léger jeu dans l'ouverture 34, autorisant un léger débattement angulaire de la tige filetée autour de l'axe L, inférieur à 45°, de préférence inférieur à 30°entre un état neuf et un état usé des garnitures de friction du disque de friction.

Un tel jeu permettant un faible débattement de la tige filetée autour de l'axe L, tout en arrêtant la rotation de la tige filetée 25 autour dudit axe L, au-delà dudit débattement autorisé.

En fonctionnement, la rotation de la tige filetée 25 est ainsi globalement arrêtée par coopération de forme entre la seconde partie 25b et l'ouverture 34 de l'organe de rattrapage 18.

Le déplacement en translation (selon l'axe L) de la tige filetée 25 par rapport à la cassette 27 entraîne ainsi la rotation de l'organe de rattrapage 18 par rapport au plateau de pression 4, de sorte que l'extrémité 19 de l'organe de rattrapage 18 s'écarte axialement du plateau de pression 4, de façon à compenser l'usure du disque de friction 5.

Les moyens de déplacement comportent en outre un organe élastique 35 qui est élastiquement déformable. L'organe élastique, également désigné ci-après cliquet 35, comporte (voir figures 1 à 5) une première partie 36 s'étendant axialement, fixée à la partie radiale du couvercle 2, par exemple par l'intermédiaire de rivets, et une deuxième partie 37 formant un organe d'actionnement, s'étendant axialement depuis la première partie 36, l'extrémité libre de la deuxième partie 37 formant une zone d'actionnement maintenue en appui sur la denture 24 de la roue à rochet 23.

La première partie 36 et la deuxième partie 37 du cliquet 35 sont liées par la zone de liaison 38.

Le cliquet comporte en outre une portion d'appui 39 décalée radialement vers l'intérieur par rapport à la deuxième partie 37 et s'étendant axialement en direction du diaphragme 10.

Le cliquet 35 est actionné par le déplacement du diaphragme 10 entre ses positions embrayée et débrayée. En variante, le cliquet 35 est actionné par les moyens à rampe 18 entre ses positions embrayée et débrayée.

En particulier, le cliquet 35 est écarté élastiquement de sa position de repos lors de l'actionnement du diaphragme 10 vers sa position embrayée.

Le mécanisme 1 comporte en outre des moyens d'anti-rotation 42 aptes à autoriser la rotation de la roue à rochet 23 dans un unique sens de rotation (figure 9).

En particulier, les moyens d'anti-rotation 42 comportent deux parties se présentant chacune sous la forme d'une tôle 43, lesdites tôles 43 étant empilées l'une sur l'autre, chaque tôle 43 comportant plusieurs lamelles élastiques 44 adjacentes dont les extrémités libres sont aptes à venir en appui sur la denture 24 de la roue à rochet 23.

Les extrémités desdites lamelles 44 sont maintenues élastiquement en appui sur la denture 24 de la roue à rochet 23, dans des zones situées à des distances différentes l'une de l'autre par rapport à l'axe de rotation L de la roue à rochet 23. Lesdites extrémités sont aptes à glisser sur les dents 24, dans un premier sens de rotation de la roue à rochet 23 et sont aptes à bloquer la rotation de la roue à rochet 23 dans un second sens de rotation de la roue à rochet 23, par appui sur les épaulements formés dans le fond des dents 24.

Les tôles 43 sont fixées au plateau de pression 4, par exemple par rivetage. Le mécanisme peut être dépourvu de tels moyens d'anti-rotation 42.

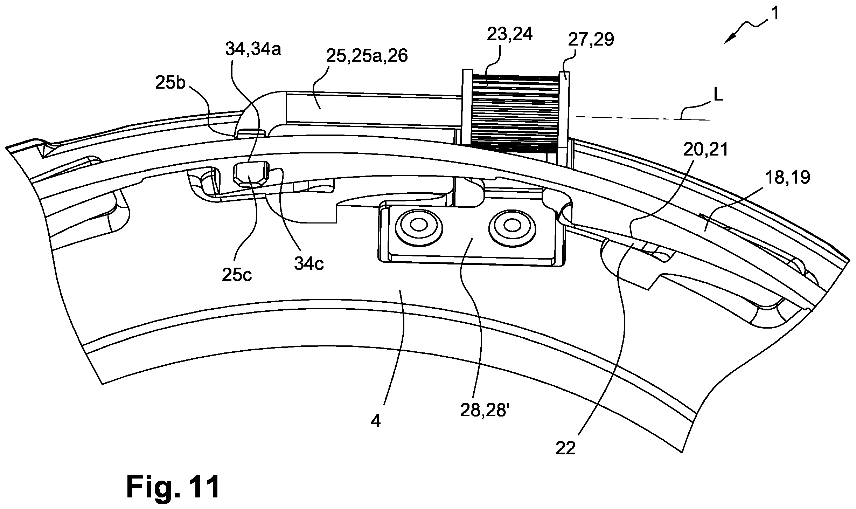

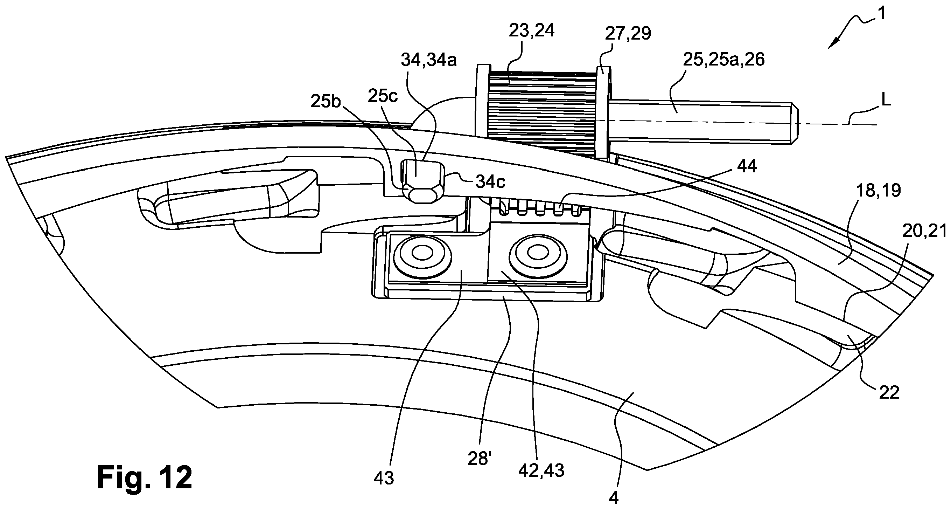

Les figures 11 et 12 représentent la position de la tige filetée 25 et de l'organe de rattrapage 18 par rapport au plateau de pression 4, respectivement en l'absence d'usure du disque de friction 5 et pour un disque de friction 5 usé.

Le fonctionnement du mécanisme va maintenant être décrit en référence aux figures 1 à 5. Sur ces figures, les moyens d'anti-rotation 42 ne sont pas représentés.

La figure 1 représente le mécanisme en position embrayée et à l'état neuf. Dans cette position, l'extrémité libre de la zone d'actionnement 37 est maintenue élastiquement en appui sur la denture 24 de la roue à rochet 23, à l'extrémité d'une dent 24, sans toutefois sauter la dent 24.

Lors de la phase de débrayage (figures 2 et 3), la butée d'embrayage exerce un effort F sur l'extrémité radialement interne des doigts 12. Le diaphragme 10 étant articulé autour des zones d'appui 13 du couvercle 2, la périphérie radialement externe du diaphragme 10 vient en appui sur la portion d'appui 39 du cliquet 35, de façon à l'actionner.

Lors du débrayage, le cliquet 35 glisse sur la roue à rochet 23 de la valeur d'une dent, jusqu'à la mise en contact de la portion d'appui 39 avec le diaphragme 10. Le cliquet 35 est alors entraîné par le plateau de pression 4 de sorte qu'il n'y a plus de mouvement relatif entre la zone d'actionnement 37 du cliquet 35 et la roue à rochet 23. Il n'y a plus de rotation possible de la roue à rochet 23. Le plateau de pression 4 est relâché en phase de débrayage de sorte que celui-ci s'écarte du plateau de réaction 3 par l'action des languettes élastiques de rappel 17. Les mouvements relatifs permettent de maintenir la zone d'actionnement 37 du cliquet 35 sur la même dent 24 de la roue à rochet 23.

La figure 2 illustre le mécanisme en cours de débrayage et la figure 3 illustre le mécanisme en position complètement débrayée. Dans tous les cas, lors du débrayage, la zone d'actionnement 37 est maintenue élastiquement en appui sur la denture 24 de la roue à rochet 23, sans sauter de dent 24.

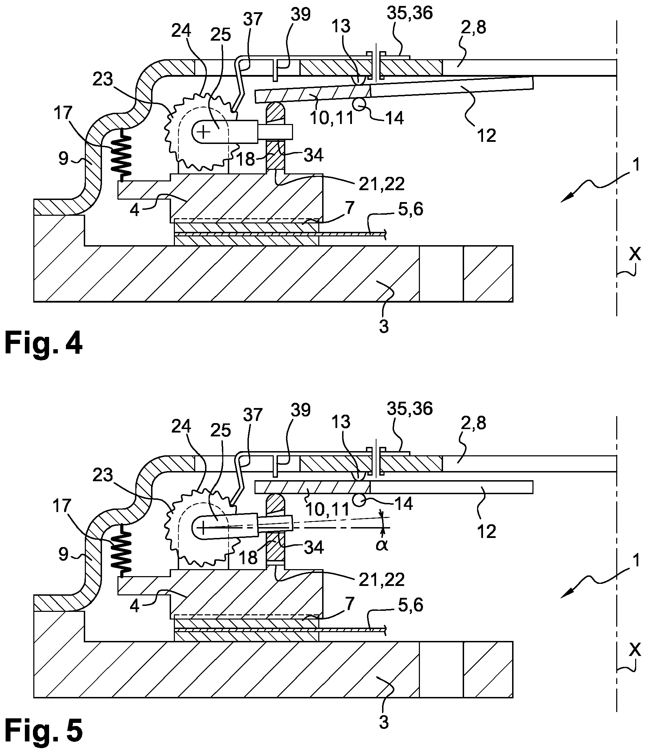

Après une usure suffisante du disque de friction 5 et en position embrayée, l'extrémité libre de la zone d'actionnement 37 saute une dent 24, comme illustré à la figure 4. Ainsi, lors de la phase de débrayage suivante, la roue à rochet 23 est entraînée en rotation par appui de ladite extrémité dans l'épaulement formé dans le fond de la dent 24 correspondante. La rotation de la roue à rochet 23 lors de cette phase de débrayage entraîne le déplacement de la tige filetée 25 selon son axe principal L et, ainsi, la rotation de l'organe de rattrapage 18, du fait de la liaison au niveau de la partie 25b de la tige filetée 25 et de l'ouverture 41 de l'organe de rattrapage d'usure 18.

Une telle rotation de l'organe de rattrapage 18 par rapport au plateau de pression 4 provoque un coulissement des rampes 21 sur les contre-rampes 22 et, ainsi, un écartement selon l'axe X du diaphragme 10 par rapport au plateau de pression 4, d'une valeur permettant de compenser l'usure. Dans ce dispositif, l'arrêt en rotation de la tige filetée 25 se fait par coopération de forme entre la seconde partie 25 coudée et les moyens à rampe 18. La rotation de la tige filetée 25 ne peut se faire que selon un unique sens de rotation, grâce à la présence des moyens d'anti-rotation 42 coopérant avec la roue 23. Les moyens 42 d'anti-rotation comportant des lamelles élastiques 44 (non représentées sur la figure 4).

La figure 5 illustre le mécanisme à l'issue de cette phase de rattrapage d'usure.

On notera que le jeu entre la seconde partie 25b de la tige filetée 25 et l'ouverture 34 permet de compenser le déplacement du plateau de pression 4 (et donc de l'axe L) par rapport à l'ouverture, selon l'axe X, au fur et à mesure que l'usure du disque de friction 5 est compensée. Un tel déplacement est induit par le déplacement relatif des rampes 21 par rapport aux contre-rampes 22.

En effet, après rattrapage d'usure, la seconde partie 25b tend à se positionner de façon oblique par rapport au plan radial, comme cela est visible (voir angle a) à la figure 5. L'orientation oblique du bord 34a de l'ouverture 34 permet d'éviter toute interférence avec la seconde partie 25b de la tige filetée 25 afin d'éviter de sur-contraindre l'ensemble.

Les figures 13 à 15 illustre un mécanisme d'embrayage 1 selon une seconde forme de réalisation, qui diffère de celle décrite précédemment en ce que la partie 25a de la tige filetée 25 est guidée en rotation dans les ouvertures 31 des flancs, à la manière d'un palier lisse, la roue à rochet 23 pivotant autour de la partie 25a de la tige filetée 25. Ainsi, dans cette forme de réalisation, la roue à rochet 23 est dépourvue de zones d'extrémité cylindrique 30.

Dans ce second mode de réalisation, la fabrication de l'écrou 23 est simplifiée.

## Revendications

1. Mécanisme d'embrayage (1), notamment pour véhicule automobile, comportant :
- un couvercle (2),
- un plateau de pression (4) mobile par rapport au couvercle (2) selon un axe (X) du mécanisme, et destiné à coopérer avec un disque de friction (5),
- un diaphragme (10) mobile entre une position embrayée et une position débrayée, apte à actionner le déplacement du plateau de pression (3),
- des moyens de rattrapage d'usure intercalés entre le diaphragme et le plateau de pression, lesdits moyens de rattrapage comportant des moyens à rampe (18, 21) coopérant avec des moyens à contre-rampe (4, 22) de façon à ce que la rotation des moyens à rampe (18, 21) par rapport aux moyens à contre-rampe (4, 22) modifie la distance entre le diaphragme (10) et le plateau de pression (3), et des moyens d'entraînement en rotation des moyens à rampe (18), lesdits moyens d'entraînement comportant un écrou (23) coopérant avec une tige filetée (25) selon un axe principal (L), **caractérisé en ce que** l'écrou (23) est lié au plateau de pression (4) et est apte à pivoter autour de son axe principal (L), la tige filetée (25) étant insérée dans les moyens à rampe (18), de façon à entraîner la rotation des moyens à rampe (18) par rapport au plateau de pression (4), par rotation de l'écrou (23) autour de la tige filetée (25), la tige filetée (25) étant arrêtée en rotation autour de l'axe principal (L) par coopération de forme entre la tige filetée (25) et les moyens à rampe (18).

2. Mécanisme (1) selon la revendication 1, **caractérisé en ce que** la tige filetée (25) et les moyens à rampe (18) sont conçus pour limiter la rotation de la tige filetée (25) par rapport aux moyens à rampe (18), autour de l'axe principal (L), à un débattement angulaire inférieur à 45°, de préférence inférieur à 30°.

3. Mécanisme (1) la revendication 1 ou 2, **caractérisé en ce que** la tige filetée (25) comporte une partie (25b) engagée dans une ouverture (41) de forme complémentaire des moyens à rampe (18), la forme de ladite partie (25b) et de ladite ouverture (41) permettant d'arrêter en rotation la tige filetée autour de l'axe principal (L).

4. Mécanisme (1) selon la revendication 3, **caractérisé en ce que** la tige filetée (25) présente une portion coudée (25b), ladite portion coudée (25b) étant insérée dans l'ouverture (41) des moyens à rampe (18).

5. Mécanisme (1) selon l'une des revendications 1 à 4, **caractérisé en ce que** l'écrou (23) est monté dans une cassette (27) fixe par rapport au plateau de pression (4).

6. Mécanisme (1) selon la revendication 5, **caractérisé en ce que** la cassette (27) comporte une base (28) à partir de laquelle s'étendent deux flancs (29) écartés circonférentiellement l'un par rapport à l'autre, l'écrou (23) étant monté circonférentiellement entre les flancs (29) de la cassette. (27).

7. Mécanisme (1) selon la revendication 5 ou 6, **caractérisé en ce que** l'écrou (25) est guidé en rotation sur la cassette (27).

8. Mécanisme (1) selon la revendication 5 ou 6, **caractérisé en ce que** la tige filetée (25) est guidée en rotation sur la cassette (27).

9. Mécanisme (1) selon l'une des revendications 1 à 8, **caractérisé en ce que** l'écrou (23) comprend des moyens d'entraînement formés à sa périphérie externe, les moyens d'entraînement de l'écrou comportant une roue à rochet (23) coopérant avec des moyens d'encliquetage (35), lesdits moyens d'encliquetage (35) étant aptes à actionner la rotation de la roue à rochet (23) en cas d'usure du disque de friction (5).

10. Mécanisme (1) selon la revendication 9, **caractérisé en ce que** les moyens d'encliquetage comportent un organe élastique (35) comprenant une zone d'actionnement (39) maintenue en appui sur une denture (24) de la roue à rochet (23).

11. Mécanisme (1) selon l'une des revendications 9 ou 10, **caractérisé en ce que** la tige filetée (25) passe au travers de la roue à rochet (23).

12. Mécanisme (1) selon l'une des revendications 1 à 11, **caractérisé en ce que** la tige filetée (25) se déplace par rapport à l'écrou (23) selon son propre axe principal (L).

13. Mécanisme (1) selon l'une des revendications 1 à 12, **caractérisé en ce qu'**il comporte des moyens d'anti-rotation (42) aptes à autoriser la rotation de l'écrou (23) et/ou de la roue à rochet (23) dans un unique sens de rotation.

14. Mécanisme (1) selon la revendication 13, **caractérisé en ce que** les moyens d'anti-rotation (42) comportent au moins deux lamelles élastiques (44), maintenues en appui sur la denture (24) de la roue à rochet (23), dans des zones situées à des distances différentes l'une de l'autre par rapport à l'axe de rotation (L) de la roue à rochet (23).

15. Dispositif comprenant un mécanisme d'embrayage (1) selon l'une des revendications 1 à 14, **caractérisé en ce qu'**il comporte un plateau de réaction (3) et un disque de friction (5), le plateau de pression (4) étant mobile par rapport au plateau de réaction (3), entre une position embrayée dans laquelle le disque de friction (5) est serré entre le plateau de pression (4) et le plateau de réaction (3), et une position débrayée, dans laquelle le disque de friction (5) est libéré.

## Patentansprüche

1. Kupplungsmechanismus (1), insbesondere für ein Kraftfahrzeug, umfassend:
- einen Deckel (2),
- eine Druckplatte (4), die bezogen auf den Deckel (2) entlang einer Achse (X) des Mechanismus beweglich ist und dazu bestimmt ist, mit einer Reibscheibe (5) zusammenzuwirken,
- eine Membran (10), die zwischen einer eingekuppelten und einer ausgekuppelten Position beweglich ist, die geeignet ist, die Bewegung der Druckplatte (3) zu bewirken,
- Verschleißnachstellmittel, die zwischen der Membran und der Druckplatte angeordnet sind, wobei die Nachstellmittel Rampenmittel (18, 21) aufweisen, die derart mit Gegenrampenmitteln (4, 22) zusammenwirken, dass die Drehung der Rampenmittel (18, 21) bezogen auf die Gegenrampenmittel (4, 22) den Abstand zwischen der Membran (10) und der Druckplatte (3) ändert, und Drehantriebsmittel der Rampenmittel (18), wobei die Antriebsmittel eine Mutter (23) aufweisen, die mit einer Gewindestange (25) entlang einer Hauptachse (L) zusammenwirkt, **dadurch gekennzeichnet, dass** die Mutter (23) mit der Druckplatte (4) verbunden ist und geeignet ist, um ihre Hauptachse (L) zu schwenken, wobei die Gewindestange (25) in die Rampenmittel (18) eingeführt ist, um die Drehung der Rampenmittel (18) bezogen auf die Druckplatte (4) durch eine Drehung der Mutter (23) um die Gewindestange (25) zu bewirken, wobei die Gewindestange (25) durch Formschluss zwischen der Gewindestange (25) und den Rampenmitteln (18) um die Hauptachse (L) rotatorisch arretiert ist.

2. Mechanismus (1) nach Anspruch 1, **dadurch gekennzeichnet, dass** die Gewindestange (25) und die Rampenmittel (18) ausgelegt sind, die Drehung der Gewindestange (25) bezogen auf die Rampenmittel (18) um die Hauptachse (L) auf einen Winkelausschlag kleiner als 45°, vorzugsweise kleiner als 30° zu begrenzen.

3. Mechanismus (1) nach Anspruch 1 oder 2, **dadurch gekennzeichnet, dass** die Gewindestange (25) einen Abschnitt (25b) umfasst, der mit einer Öffnung (41) in Eingriff steht, die eine Form aufweist, welche die Rampenmittel (18) ergänzt, wobei es die Form des Abschnitts (25b) und der Öffnung (41) gestatten, die Gewindestange um die Hauptachse (L) rotatorisch zu arretieren.

4. Mechanismus (1) nach Anspruch 3, **dadurch gekennzeichnet, dass** die Gewindestange (25) einen gekrümmten Abschnitt (25b) aufweist, wobei der gekrümmte Abschnitt (25b) in die Öffnung (41) der Rampenmittel (18) eingeführt ist.

5. Mechanismus (1) nach einem der Ansprüche 1 bis 4, **dadurch gekennzeichnet, dass** die Mutter (23) in einer Kassette (27) angebracht ist, die bezogen auf die Druckplatte (4) fest ist.

6. Mechanismus (1) nach Anspruch 5, **dadurch gekennzeichnet, dass** die Kassette (27) eine Basis (28) umfasst, von der sich zwei Flanken (29) erstrecken, die in Umfangsrichtung voneinander beabstandet sind, wobei die Mutter (23) in Umfangsrichtung zwischen den Flanken (29) der Kassette (27) angeordnet ist.

7. Mechanismus (1) nach Anspruch 5 oder 6, **dadurch gekennzeichnet, dass** die Mutter (25) rotatorisch auf der Kassette (27) geführt wird.

8. Mechanismus (1) nach Anspruch 5 oder 6, **dadurch gekennzeichnet, dass** die Gewindestange (25) rotatorisch auf der Kassette (27) geführt wird.

9. Mechanismus (1) nach einem der Ansprüche 1 bis 8, **dadurch gekennzeichnet, dass** die Mutter (23) Antriebsmittel umfasst, die auf ihrem äußeren Umfang ausgebildet sind, wobei die Antriebsmittel der Mutter ein Klinkenrad (23) umfassen, das mit Einrastmitteln (35) zusammenwirkt, wobei die Einrastmittel (35) geeignet sind, bei Verschleiß der Reibscheibe (5) die Drehung des Klinkenrads (23) zu bewirken.

10. Mechanismus (1) nach Anspruch 9, **dadurch gekennzeichnet, dass** die Einrastmittel ein elastisches Element (35) aufweisen, das einen Betätigungsbereich (39) umfasst, der in Anlage an eine Zahnung (24) des Klinkenrads (23) gehalten wird.

11. Mechanismus (1) nach einem der Ansprüche 9 oder 10, **dadurch gekennzeichnet, dass** die Gewindestange (25) durch das Klinkenrad (23) hindurch verläuft.

12. Mechanismus (1) nach einem der Ansprüche 1 bis 11, **dadurch gekennzeichnet, dass** sich die Gewindestange (25) entlang ihrer eigenen Hauptachse (L) bezogen auf die Mutter (23) bewegt.

13. Mechanismus (1) nach einem der Ansprüche 1 bis 12, **dadurch gekennzeichnet, dass** er Drehsicherungsmittel (42) aufweist, die geeignet sind, die Drehung der Mutter (23) und/oder des Klinkenrads (23) in einer einzigen Drehrichtung zu gestatten.

14. Mechanismus (1) nach Anspruch 13, **dadurch gekennzeichnet, dass** die Drehsicherungsmittel (42) mindestens zwei elastische Lamellen (44) aufweisen, die in Bereichen, die sich in unterschiedlichen Abständen voneinander bezogen auf die Drehachse (L) des Klinkenrads (23) befinden, in Anlage an die Zahnung (24) des Klinkenrads (23) gehalten werden.

15. Vorrichtung umfassend einen Kupplungsmechanismus (1) nach einem der Ansprüche 1 bis 14, **dadurch gekennzeichnet, dass** sie eine Gegenanpressplatte (3) und eine Reibscheibe (5) aufweist, wobei die Druckplatte (4) bezogen auf die Gegenanpressplatte (3) zwischen einer eingekuppelten Position, wobei die Reibscheibe (5) zwischen die Druckplatte (4) und der Gegenanpressplatte (3) gedrückt wird, und einer ausgekuppelten Position, wobei die Reibscheibe (5) freigesetzt ist, beweglich ist.

## Claims

1. Clutch mechanism (1), notably for a motor vehicle, comprising:
- a cover (2),
- a pressure plate (4) able to move with respect to the cover (2) along an axis (X) of the mechanism, and intended to collaborate with a friction disc (5),
- a diaphragm (10) able to move between a clutch-engaged position and a clutch-disengaged position, able to actuate the movement of the pressure plate (3),
- wear compensation means interposed between the diaphragm and the pressure plate, the said compensation means comprising ramp means (18, 21) collaborating with counter-ramp means (4, 22) such that rotation of the ramp means (18, 21) with respect to the counter-ramp means (4, 22) alters the distance between the diaphragm (10) and the pressure plate (3), and rotational-drive means driving the rotation of the ramp means (18), the said drive means comprising a nut (23) collaborating with a threaded rod (25) along a main axis (L), **characterized in that** the nut (23) is connected to the pressure plate (4) and is able to pivot its main axis (L), the threaded rod (25) being inserted in the ramp means (18) so as to drive the rotation of the ramp means (18) with respect to the pressure plate (4) by the rotation of the nut (23) about the threaded rod (25), the threaded rod (25) being stopped from rotating about the main axis (L) by collaboration of shapes between the threaded rod (25) and the ramp means (18).

2. Mechanism (1) according to Claim 1, **characterized in that** the threaded rod (25) and the ramp means (18) are designed to limit the rotation of the threaded rod (25) with respect to the ramp means (18), about the main axis (L), to an angular travel of less than 45º, preferably less than 30º.

3. Mechanism (1) according to Claim 1 or 2, **characterized in that** the threaded rod (25) comprises a part (25b) engaged in an opening (41) of complementary shape belonging to the ramp means (18), the shape of the said part (25b) and of the said opening (41) making it possible to stop the threaded rod from rotating about the main axis (L).

4. Mechanism (1) according to Claim 3, **characterized in that** the threaded rod (25) has a bent portion (25b), the said bent portion (25b) being inserted into the opening (41) of the ramp means (18).

5. Mechanism (1) according to one of Claims 1 to 4, **characterized in that** the nut (23) is mounted in a cassette (27) which is fixed with respect to the pressure plate (4).

6. Mechanism (1) according to Claim 5, **characterized in that** the cassette (27) has a base (28) from which there extend two side walls (29) which are circumferentially separated from one another, the nut (23) being mounted circumferentially between the side walls (29) of the cassette (27).

7. Mechanism (1) according to Claim 5 or 6, **characterized in that** the nut (25) is guided in rotation on the cassette (27).

8. Mechanism (1) according to Claim 5 or 6, **characterized in that** the threaded rod (25) is guided in rotation on the cassette (27).

9. Mechanism (1) according to one of Claims 1 to 8, **characterized in that** the nut (23) comprises drive means formed on its external periphery, the drive means for the nut comprising a ratchet wheel (23) collaborating with pawl means (35), the said pawl means (35) being able to actuate the turning of the ratchet wheel (23) in the event of wearing of the friction disc (5).

10. Mechanism (1) according to Claim 9, **characterized in that** the pawl means comprise an elastic member (35) comprising an actuating zone (39) kept pressed against a toothset (24) of the ratchet wheel (23).

11. Mechanism (1) according to one of Claims 9 and 10, **characterized in that** the threaded rod (25) passes through the ratchet wheel (23).

12. Mechanism (1) according to one of Claims 1 to 11, **characterized in that** the threaded rod (25) moves with respect to the nut (23) along its own main axis (L) .

13. Mechanism (1) according to one of Claims 1 to 12, **characterized in that** it comprises rotation prevention means (42) able to allow the nut (23) and/or the ratchet wheel (23) to rotate in only one direction of rotation.

14. Mechanism (1) according to Claim 13, **characterized in that** the rotation prevention means (42) comprise at least two elastic leaves (44) kept pressed against the toothset (24) of the ratchet wheel (23) in regions situated at mutually different distances from the axis of rotation (L) of the ratchet wheel (23) .

15. Device comprising a clutch mechanism (1) according to one of Claims 1 to 14, **characterized in that** it comprises a reaction plate (3) and a friction disc (5), the pressure plate (4) being able to move with respect to the reaction plate (3) between a clutch-engaged position in which the friction disc (5) is clamped between the pressure plate (4) and the reaction plate (3), and a clutch-disengaged position, in which the friction disc (5) is freed.
